# EUROPEAN PATENT APPLICATION

(11) **EP 2 392 418 A1**
(43) Date of publication of application: **07.12.2011**
(21) Application number: 10164649.5
(22) Date of filing: 01.06.2010
(51) Int. Cl.: B21D 19/00, F16L 9/02, F16L 23/04

(54) **A metal pipe for conducting a medium, a pipe arrangement and a method for manufacturing a metal pipe**

(71) Applicant: AB Alvenius Industrier, 631 07 Eskilstuna (SE)
(72) Inventor: Fredriksson, Göran, 631 07 Eskilstuna (SE); Johansson, Kurt, 631 07 Eskilstuna (SE)
(74) Representative: Reyier, Ann-Mari

(57) **Abstract**

A metal pipe (1, 1a, 1b) for conducting a medium, a pipe arrangement (30) and a method for manufacturing a metal pipe. The metal pipe comprises an elongated conduction section (3) with a first diameter (D1), two end sections (5) and a longitudinal axis (L), wherein at least one of the end sections is adapted to be connected to an end section of a corresponding metal pipe by means of a connection element (7). The end section comprises a first flange (9) at the end of the pipe protruding towards the longitudinal axis. The end section comprises a cylindrical section (10) extending in parallel with the longitudinal axis between the first flange and the conduction section. The cylindrical section has a second diameter (D2), which second diameter is larger that the first diameter.

## Description

### FIELD OF THE INVENTION

The present invention relates to a metal pipe according to the preamble of claim 1 and a pipe arrangement according to the preamble of claim 10. The present invention also relates to a method for manufacturing a metal pipe according to claim 14.

### PRIOR ART

Metal pipes are used for conducting a medium. The medium is for example a fluid, such as air, water etcetera. The medium may also be various size elements of a solid material, for example in the form of slurry or similar.

The end section of the metal pipe and the end section of the corresponding metal pipe are connected by means of the connection element. Thereby, the pipe arrangement comprising a plurality of metal pipes is formed. Pipe arrangements have the benefit that they can quickly be assembled and disassembled.

Pipe arrangements are commonly used in the mining industry, in tunnels, etcetera. Furthermore, pipe arrangements are used in industries to transport process water and wastewater. The pipe arrangements are in some cases used for transporting drinking water.

Metal pipes according to the state of the art comprise connection parts for enabling the connection of metal pipes by means of the connection element. The connection part is attached to the ends of a precursor metal pipe by means of welding, soldering, etcetera. The attachment of the connection part has the disadvantage that the dimensional tolerance on the connection part and the end of the precursor metal pipe are high, wherein precursor metal pipes that deviate from the tolerance requirement must be scraped. For example, the end of the precursor metal pipe may be damage during handling so that the end part can not be attached to the pipe end.

GB224021 discloses a metal pipe and a pipe arrangement. The end section of the metal pipe comprises a radially directed flange. The flange is adapted to abut a flange of a corresponding metal pipe. The end section of the metal pipe is arranged to provide elasticity in the axial direction of the pipe. The end section of the metal pipe has been formed by means of a method where the pipe end is axially pressed into a die, wherein the wall thickness of the end section increases in comparison to the wall thickness of the pipe's conduction section.

### OBJECTS AND SUMMARY OF THE INVENTION

The object of the present invention is to facilitate the connection of a metal pipe to a corresponding metal pipe. A further object of the present invention is to provide a metal pipe and a pipe arrangement that is manufactured with relaxed tolerance requirements in comparison with prior art. A further object of the invention is a metal pipe that is manufactured without welding, soldering or similar attachment methods. Furthermore, the invention provides a method for manufacturing the above metal pipe.

This object is achieved by a metal pipe as initially defined, characterized in that the at least one end section comprises a cylindrical section extending in parallel with the longitudinal axis between the first flange and the conduction section, wherein the cylindrical section has a second diameter, which second diameter is larger that the first diameter.

The cylindrical section provides a grip for the connection element when the end section of the metal pipe is connected to the end section of the corresponding metal pipe. The cylindrical section enables a connection without limiting the diameter of the conduction section.

The first flange provides increased resistance to deformation of the end section of the metal pipe, such as due to hit or similar. A deformed end section may prevent the metal pipe from being connected to a corresponding metal pipe.

According to one embodiment of the invention, each of the two end sections comprises the cylindrical section.

According to one embodiment of the invention, the first flange protrudes from the second diameter of the cylindrical section.

According to one embodiment of the invention, the metal pipe comprises an end opening at the end of the pipe and the conduction section comprises a conduction opening, wherein the diameter of the end opening is larger or equal to the diameter of the conduction opening. Accordingly, the flow of the medium is not restricted by the first flange.

According to one embodiment of the invention, the first flange comprises a first surface directed away from the conduction section, wherein the first surface has not been subjected to machining.

The first flange is adapted to be separated from the first flange of the corresponding metal pipe. Thereby, the first surface does not require machining in order to provide the connection between the metal pipe and the corresponding metal pipe.

According to one embodiment of the invention, the at least one end section comprises a second flange connecting the cylindrical section to the conduction section, wherein the second flange is adapted, in a connected state, to abut the connection element, wherein the end section of the metal pipe and the end section of the corresponding metal pipe are held together.

According to one embodiment of the invention, the conduction section has a first wall thickness and the cylindrical section has a second wall thickness, wherein the second wall thickness is thinner than the first wall thickness.

According to one embodiment of the invention, the at least one end section comprises a transition from the cylindrical section to the second flange, which transition comprises a radius, which radius is less than the sum of the second wall thickness and 0,5 mm.

According to one embodiment of the invention, the at least one end section comprises a transition from the cylindrical section to the second flange, which transition comprises a radius of less than 3,5 mm, preferably less than 2,5 mm.

According to one embodiment of the invention, said cylindrical section has been formed by expanding the end section. Thereby, the manufacturing of the metal pipe is simplified, wherein no welding, soldering, etcetera, is required. Accordingly, the tolerance requirement for producing the metal pipe is lower than prior art metal pipes.

According to one embodiment of the invention, said expansion was done in a cold state, wherein the cylindrical section is formed by means of cold forming. The term "cold state" refers to that the temperature of the metal tube was below its recrystallization temperature.

The object of the invention is also achieved by a pipe arrangement according to claim 10. The pipe arrangement comprises a first metal pipe and a second metal pipe and a connection element, wherein the end section of the first metal pipe and the end section of the second metal pipe are directed towards each other and held together by means of the connection element.

According to one embodiment of the invention, the pipe arrangement comprises a sealing element between the connection element and the cylindrical sections, wherein the sealing element is adapted to prevent leakage of the medium.

The sealing element is adapted to seal the connection between the first metal pipe and the second metal pipe. Furthermore, the first flange of the first metal pipe and the first flange of the second metal pipe are separated from each other.

According to one embodiment of the invention, the first flange of the first metal pipe and the first flange of the second metal pipe are separated from each other by a gap.

According to one embodiment of the invention, the sealing element comprises a first part adapted to abut the cylindrical section of the first metal pipe and a second part adapted to abut the cylindrical section of the second metal pipe.

The first and the second part of the sealing element are in contact with the cylindrical section and assure that no leakage of the medium occurs.

According to one embodiment of the invention, the sealing element is adapted to form a space for the medium between the connection element and the first and the second metal pipe.

The object of the invention is also achieved by a method for manufacturing a metal pipe according to claim 14, wherein the method comprises
providing a precursor metal pipe into a pipe end forming machine,
introducing an expansion tool into the end sections of the precursor metal pipe,
expanding the expansion tool towards the end sections of the precursor metal pipe so that the end sections of the precursor metal pipe is plastically deformed, wherein the metal pipe is formed,
compressing the expansion tool away from the end section of the metal pipe,
removing the expansion tool from the end sections of the metal pipe, and
removing the metal pipe from the pipe end forming machine.

According to one embodiment of the invention, the method further comprises:
expanding the expansion tool towards the end sections of the precursor metal pipe so that the end sections of the precursor metal pipe is plastically deformed into a surrounding die,
compressing the expansion tool away from the end section of the metal pipe, and
expanding the die away from the end section of the metal pipe.

According to one embodiment of the invention, the method further comprises:
repeatedly performing the steps of:
   compressing the die towards the end section of the precursor metal pipe so that the end section of the precursor metal pipe is plastically deformed between the expansion tool and the die, expanding the die away from the end section of the precursor metal pipe, and
   rotating the expansion tool without rotating the metal pipe.

By means of the repeated steps the cylindrical section is reshaped. Thereby, it is possible to obtain smaller radiuses of the flanges of metal pipe compared to a single forming step.

### BRIEF DESCRIPTION OF THE DRAWINGS

The invention will now be explained more closely by the description of different embodiments of the invention and with reference to the appended figures.
Figure 1-4 show different views of a metal pipe for conducting a medium.
Figure 1 shows a side view of the metal pipe.
Figure 2 shows a side view of an end section of the metal pipe.
Figure 3 shows the end section viewed along a longitudinal axis of the metal pipe.
Figure 4 shows a cross section along A - A of the metal pipe.
Figure 5 shows a cross section of a pipe arrangement with metal pipes according to Fig. 1-4.
Figure 6 shows a block diagram of a method for manufacturing the metal pipe.

### DETAILED DESCRIPTION OF PREFERRED EMBODIMENTS OF THE INVENTION

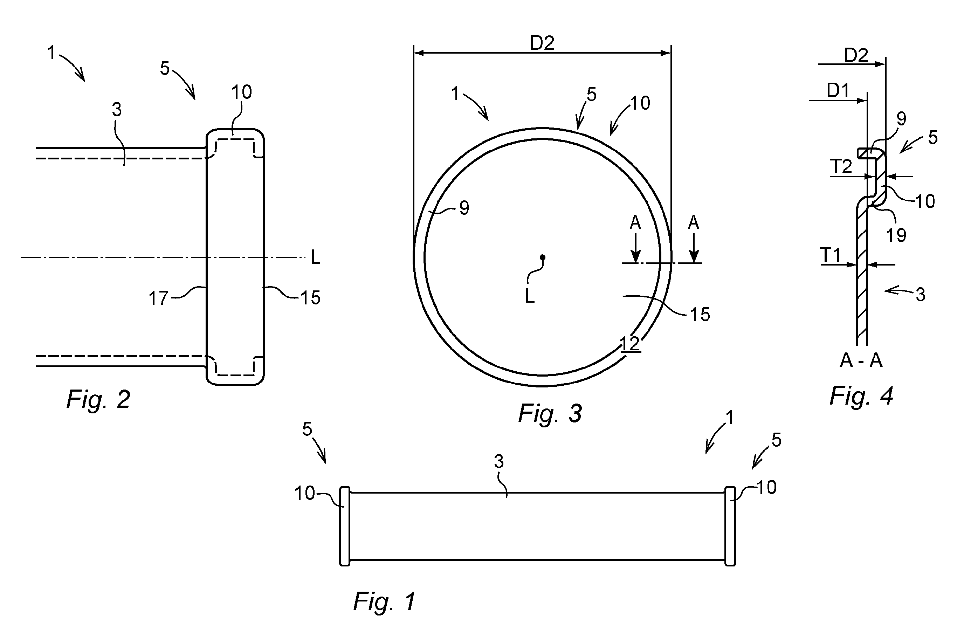

Figure 1 - 4 shows a metal pipe 1 according to an embodiment. The metal pipe 1 is adapted to conduct a medium, such as air, water, a slurry, etcetera.

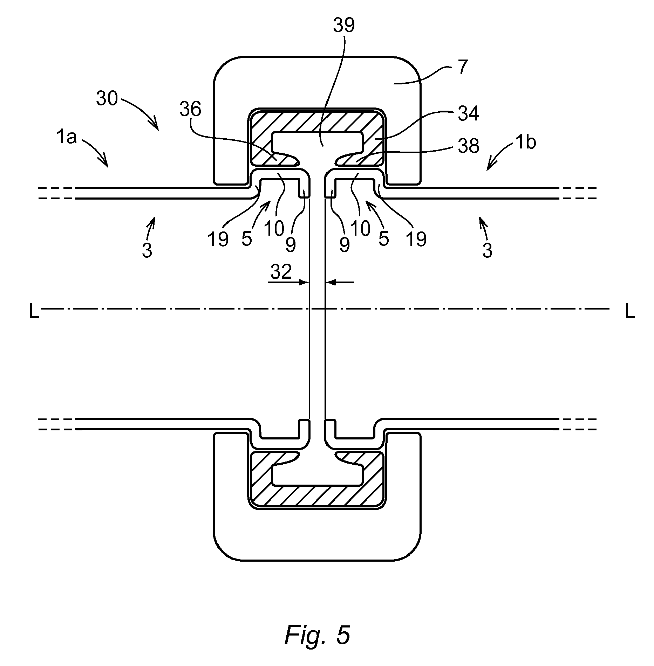

The metal pipe 1 comprises an elongated conduction section 3, two end sections 5 and a longitudinal axis L. The end sections 5 are adapted to be connected to an end section of a corresponding metal pipe by means of a connection element 7, as seen in figure 5.

The elongated conduction section 3 comprises a first diameter D1. The conduction section 3 is adapted to conduct the medium.

Each of the end sections 5 comprises a first flange 9 at the end of the metal pipe 1 and a cylindrical section 10. The cylindrical section 10 is extending in parallel with the longitudinal axis L.

The cylindrical section 10 is located between the first flange 9 and the conduction section 3. The cylindrical section 10 has a second diameter D2. The second diameter D2 of the cylindrical section 10 is larger than the first diameter D1 of the conduction section 3.

The first flange 9 comprises a first surface 12 directed away from the conduction section 3. The first surface 12 is essentially flat, wherein the surface 12 extends perpendicularly to the longitudinal axis L. In an embodiment the first surface 12 has not been subjected to machining.

The first flange 9 protrudes towards the longitudinal axis L from second diameter D2 of a cylindrical section 10. The metal pipe 1 comprises an end opening 15 at the end of a metal pipe 1. The diameter of the end opening 15 is set by the protruding length of the first flange 9 from the cylindrical section 10.

The conduction section 3 comprises a conduction opening 17. The diameter of the conduction opening 17 is set by the first diameter D1 and a first wall thickness T1 of the metal pipe 1 at the conduction section 3. In a preferred embodiment the diameter of the end opening 15 is larger or equal to the diameter of a conduction opening 17.

Each of the end sections 5 comprises a second flange 19. The second flange 19 connects the cylindrical section 10 to the conduction section 3. The second flange 19 is adapted, when the metal pipe 1 is in a connected state, to abut the connection element 7. Thereby, the end section 5 of the metal pipe 1 and the end section of a corresponding metal pipe are held together.

The cylindrical section 3 of the metal pipe 1 has been formed by expanding the end section 5 in a direction away from the longitudinal axis L. In a preferred embodiment the end section 5 has been expanded in a direction perpendicular to the longitudinal axis L. In a preferred embodiment the expansion is done in a cold state of a precursor metal pipe, wherein the expansion results in a cold deformation of the metal pipe 1.

The conduction section 3 comprises the first wall thickness T1 and the cylindrical section 10 comprises a second wall thickness T2. Due to the expansion of the metal pipe 1 during manufacturing, the second wall thickness T2 is thinner than the first wall thickness T1. The first flange 9 improves the resistance of the end section 5 to deformation, such as external hit or similar.

The cylindrical section 10 has been manufactured seamless without welding, soldering or similar attachment methods. Accordingly, the metal pipe 1 is produced in a simple and cost effective manner in comparison to prior art metal pipes. Furthermore, the tolerance requirement on the precursor metal pipe is less than prior art.

The metal pipe 1 is made of a metal, such as steel, copper, etcetera. In an embodiment the pipe 1 is made of spiral welded steel. In a preferred embodiment the metal pipe is coated with zinc, wherein a high corrosion resistance is obtained.

Figure 5 shows a cross section of a pipe arrangement 30 with metal pipes 1 according to figure 1-4. The pipe arrangement 30 comprises a first metal pipe 1a, a second metal pipe 1b and a connection element 7. The end sections 5 of the first metal pipe 1 a and the end section 5 of the second metal pipe 1 b are directed towards each other and are held together by means of the connection element 7. Thereby, the longitudinal axis L of the first metal pipe 1a is essentially parallel with the longitudinal axis L of the second metal pipe 1 b.

The first flange 9 of the first metal pipe 1a and the first flange 9 of the second metal pipe 1 b are directed towards each other and are separated from each other by a gap 32. Accordingly, the first flange of the first metal pipe 1 a and the first flange 9 of the second metal pipe 1b lack contact with each other. Thereby, the longitudinal axis L of the first metal pipe 1 a may be slanted in respect to the longitudinal axis L of the second metal pipe 1b. Accordingly, the pipe arrangement 30 allows a certain inclination of the first metal pipe 1 a in respect to the second metal pipe 1 b.

The pipe arrangement 30 comprises a sealing element 34 located between the connection element 7 and the cylindrical sections 10 of the first metal pipe 1 a and the second metal pipe 1b. The sealing element 34 is adapted to prevent leakage of the medium.

In an embodiment the sealing element 34 comprises an elastic material, such EPDM-rubber, Nitrile polymers, Silicone polymers, etcetera.

The sealing element 34 comprises a first part 36 abutting the cylindrical section 10 of the first metal pipe 1a and a second part 38 abutting the cylindrical section 10 of the second metal pipe 1 b.

The cross section of the sealing element 34 is U-shaped. The connection element 7 and the sealing element 34 surround the cylindrical section 10 of the first metal pipe 1a and the second metal pipe 1b. The sealing element 34 abuts the whole circumference of the cylindrical sections 10 of the first metal pipe 1a and the second metal pipe 1 b.

The connection element 7 abuts the second flange 19 of each of a first metal pipe 1a and the second metal pipe 1 b. The connection element 7 and the second flange 19 prevent an axial displacement of a first metal pipe 1 a and the second metal pipe 1 b away from each other.

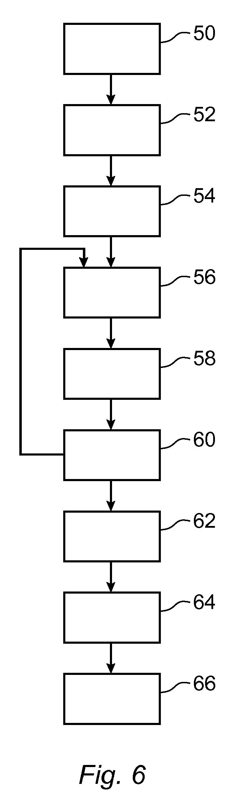

Figure 6 shows a block diagram of a method for manufacturing the metal pipe 1, 1 a, 1 b.

In block 50 the method comprises providing a precursor metal pipe into a pipe end forming machine. The precursor metal pipe is a metal pipe that is to be subjected to the method of forming the end section 5 of the metal pipe 1, 1 a, 1 b.

In block 52 the method comprises introducing an expansion tool into at least one of the end sections of the precursor metal pipe.

In block 54 the method comprises expanding the expansion tool towards the end sections of a precursor metal pipe so that the end sections of the precursor metal pipe is plastically deformed into a surrounding die.

In an embodiment the method comprises the iterative sequence of in block 56 compressing the die towards the end section of the precursor metal pipe so that the end section of the precursor metal pipe is plastically deformed between the expansion tool and the die, in block 58 expanding the die away from the end section of the precursor metal pipe, and in block 60 rotating the expansion tool.

By means of the steps in block 56, 58 and 60, the cylindrical section 10 is reshaped. Thereby, it is possible to obtain smaller radius of a transition from the cylindrical section 10 to the second flange 19 than would be possible in a one step forming process.

The following steps of the method regard the finishing steps of the method. In block 62 the method comprises compressing the expansion tool away from the end section of the metal pipe 1, 1 a, 1 b. Thereby, the expansion tool is no longer in contact with the metal pipe 1, 1 a, 1 b. In block 64 the method comprises removing the expansion tool from the end sections of the metal pipe 1, 1 a, 1 b. In block 66 the method comprises expanding the die away from the end section 5 of the metal pipe 1, 1 a, 1 b and removing the metal pipe 1, 1 a, 1 b from the pipe end forming machine.

The invention is not limited to the disclosed embodiment but may be varied and modified within the scope of the following claims.

## Claims

1. A metal pipe (1, 1 a, 1 b) for conducting a medium, wherein the pipe (1, 1 a, 1 b) comprises an elongated conduction section (3) with a first diameter (D1), two end sections (5) and a longitudinal axis (L), wherein at least one of the end sections (5) is adapted to be connected to an end section (5) of a corresponding metal pipe by means of a connection element (7), said at least one end section (5) comprises a first flange (9) at the end of the pipe (1, 1 a, 1 b) protruding towards the longitudinal axis (L), **characterized in that** said at least one end section (5) comprises a cylindrical section (10) extending in parallel with the longitudinal axis (L) between the first flange (9) and the conduction section (3), wherein the cylindrical section (10) has a second diameter (D2), which second diameter (D2) is larger that the first diameter (D1).

2. A metal pipe (1, 1 a, 1 b) according to claim 1, **characterized in that** the first flange (9) protrudes from the second diameter (D2) of the cylindrical section (10).

3. A metal pipe (1, 1 a, 1 b) according to any of claim 1 and 2, **characterized in that** the metal pipe (1, 1a, 1b) comprises an end opening (15) at the end of the pipe (1, 1a, 1b) and the conduction section (3) comprises a conduction opening (17), wherein the diameter of the end opening (15) is larger or equal to the diameter of the conduction opening (17).

4. A metal pipe (1, 1a, 1b) according to any of preceding claims, **characterized in that** the first flange (9) comprises a first surface (12) directed away from the conduction section (3), wherein the first surface (12) has not been subjected to machining.

5. A metal pipe (1, 1a, 1b) according to any of preceding claims, **characterized in that** the at least one end section (5) comprises a second flange (19) connecting the cylindrical section (10) to the conduction section (3), wherein the second flange (19) is adapted, in a connected state, to abut the connection element (7), wherein the end section (5) of the metal pipe (1, 1a, 1 b) and the end section (5) of the corresponding metal pipe are held together.

6. A metal pipe (1, 1 a, 1 b) according to any of preceding claims, **characterized in that** the conduction section (3) has a first wall thickness (T1) and the cylindrical section (10) has a second wall thickness (T2), wherein the second wall thickness (T2) is thinner than the first wall thickness (T1).

7. A metal pipe (1, 1 a, 1 b) according to claim 6, **characterized in that** the at least one end section (5) comprises a transition from the cylindrical section (10) to the second flange (19), which transition comprises a radius, which radius is less than the sum of the second wall thickness (T2) and 0,5 mm.

8. A metal pipe (1, 1a, 1b) according to any of preceding claims, **characterized in that** said cylindrical section (10) has been formed by expanding the end section (5).

9. A metal pipe (1, 1a, 1b) according to claim 8, **characterized in that** said expansion was done in a cold state, wherein the cylindrical section was formed by means of cold forming.

10. A pipe arrangement (30) comprising a first metal pipe (1 a) and a second metal pipe (1b) according to any of preceding claims, and a connection element (7), **characterized in that** the end section (5) of the first metal pipe (1a) and the end section (5) of the second metal pipe (1b) are directed towards each other and held together by means of the connection element (7).

11. A pipe arrangement (30) according to claim 10, **characterized in that** the pipe arrangement (30) comprises a sealing element (34) between the connection element (7) and the cylindrical sections (10), wherein the sealing element (34) is adapted to prevent leakage of the medium.

12. A pipe arrangement (30) according to claim 11, **characterized in that** the sealing element (34) comprises a first part (36) adapted to abut the cylindrical section (10) of the first metal pipe (1a) and a second part (38) adapted to abut the cylindrical section (10) of the second metal pipe (1b).

13. A pipe arrangement (30) according to any of claim 11 and 12, **characterized in that** the sealing element (34) is adapted to form a space (39) for the medium between the connection element (7) and the first metal pipe (1a) and the second metal pipe (1b).

14. A method for manufacturing a metal pipe (1, 1a, 1b) according to any one of the preceding claims, wherein the method comprises:
- providing a precursor metal pipe into a pipe end forming machine,
- introducing an expansion tool into at least one of the end sections (5) of the precursor metal pipe,
- expanding the expansion tool towards the end section (5) of the precursor metal pipe so that the end section (5) of the precursor metal pipe (1, 1 a, 1b) is plastically deformed, wherein the metal pipe (1, 1 a, 1 b) is formed,
- compressing the expansion tool away from the end section (5) of the metal pipe (1, 1 a, 1 b),
- removing the expansion tool from the end section (5) of the metal pipe (1, 1a, 1 b), and
- removing the metal pipe (1, 1 a, 1 b) from the pipe (1, 1 a, 1 b) end forming machine.

15. A method according to claim 14, wherein the method comprises:
- expanding the expansion tool towards the end section (5) of the precursor metal pipe so that the end section (5) of the precursor metal pipe is plastically deformed into a surrounding die,
- compressing the expansion tool away from the end section (5) of the metal pipe (1, 1 a, 1 b), and
- expanding the die away from the end section (5) of the metal pipe (1, 1a, 1b).
